# EUROPEAN PATENT APPLICATION

(11) **EP 1 853 070 A1**
(43) Date of publication of application: **07.11.2007**
(21) Application number: 07106713.6
(22) Date of filing: 23.04.2007
(51) Int. Cl.: H04N 9/31

(54) **Laser projector**

(30) Priority: 02.05.2006 KR 20060039505
(71) Applicant: Samsung Electronics Co., Ltd., Suwon-si Gyeonggi-do (KR); Digital Optics Co., Ltd., Jungwon-gu, Seongnam-si, Gyeonggi-do (KR)
(72) Inventor: Park, Mun-Kue Samsung Electronics Co., Ltd., Gyeonggi-do (KR); Lee, Jung-Kee c/o Samsung Electronics Co., Ltd., Gyeonggi-do (KR); Kim, Ki-Tae c/o Samsung Electronics Co., Ltd., Gyeonggi-do (KR); Kim, Bum-Jin c/o Samsung Electronics Co., Ltd., Gyeonggi-do (KR)
(74) Representative: Grünecker, Kinkeldey, Stockmair & Schwanhäusser Anwaltssozietät

(57) **Abstract**

Provided is a laser projector. The laser projector includes a light module to generate green light, and laser light sources to generate red and blue light. The light generated in the light module and the laser light sources travels in a rectangular or a tetragonal path inside the laser projector. It can then outputted outside the laser projector.

## Description

The present invention relates generally to a laser projector, and in particular, to a portable laser projector including a spatial light modulation module.

Laser projectors include laser light sources such as a semiconductor laser to generate visible light having two or more different wavelengths, and a spatial light modulator to irradiate the light of each pixel according a particular need. Various types of spatial light modulators are being used.

In general, the laser projector uses the light of three primary colors of red, blue, and green. Green is not easily directly oscillated by a semiconductor laser. Thus, a second harmonic generator is used for its oscillation. The light of each wavelength is incident on the spatial light modulator through each path. A plurality of optical devices, such as a lens system to collimate the light of the wavelength, is disposed between the spatial light modulator and each light source.

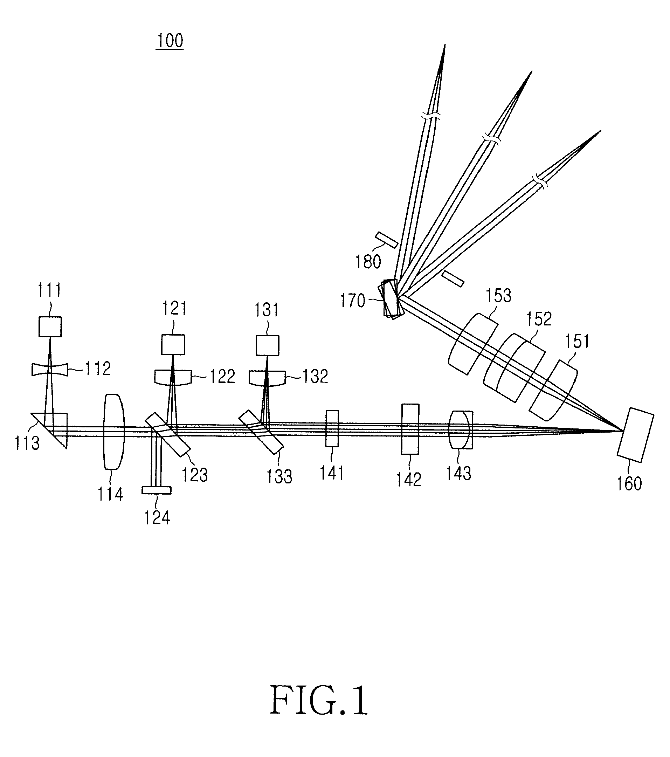

FIG. 1 illustrates a conventional laser projector. Referring to FIG. 1, the conventional laser projector 100 includes respective laser light sources 111, 121, and 131 to generate light of red, blue, and green wavelengths; lenses 112, 122, and 132 control the spot size of each light; collimation lens systems 141, 142, and 143; projection lenses 151 to 153; a spatial light modulator 160; a scanning mirror 170 having a Y-direction diaphragm; and an X-direction diaphragm 180.

One drawback of conventional laser projectors is that carriage is not easily accomplished due to its great length. Further, it is not easy to manufacture and optically arrange the scanning mirror 170 with the Y-direction diaphragm.

It is the object of the present invention to provide a portable laser projector.

This object is solved by the subject matter of the independent claims.

Preferred embodiments are defined in the dependent claims.

According to an aspect of the present invention, a laser projector is provided that includes a light module to generate green light; and laser light sources to generate red and blue light. The light generated in the light module and the laser light sources travels in a rectangular or a tetragonal path inside the laser projector. It can then be outputted outside the laser projector.

The present invention will become more apparent from the following detailed description when taken in conjunction with the accompanying drawings in which:
FIG. 1 is a diagram illustrating a conventional laser projector; and
FIG. 2 is a diagram illustrating a laser projector according to an exemplary embodiment of the present invention.

A preferred embodiment of the present invention will now be described in detail with reference to the annexed drawings. In the drawings, the same or similar elements are denoted by the same reference numerals even though they are depicted in different drawings. For the purposes of clarity and simplicity, a detailed description of known functions and configurations incorporated herein has been omitted for conciseness.

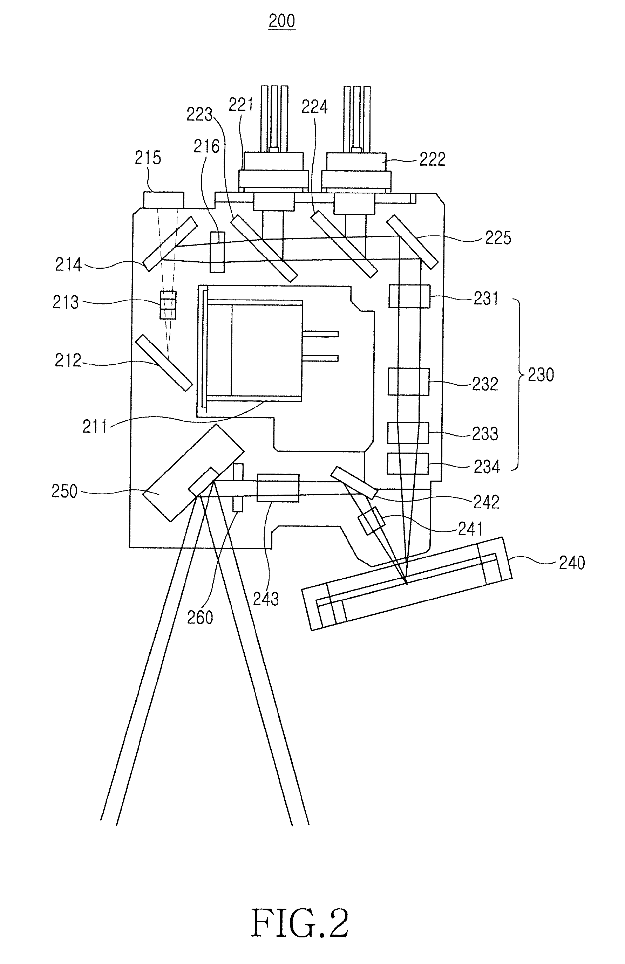

FIG. 2 illustrates a laser projector 200 according to an exemplary embodiment of the present invention. Referring to FIG. 2, the laser projector 200 includes a light module 211 to generate green light; laser light sources 221 and 222 to generate collimated red and blue light; first to fourth reflection mirrors 212, 214, 225, 242; first and second band pass filters 223 and 224; a diffusion lens 213; a light detector 215; an irradiation optical system 230; a diaphragm 260; a spatial light modulator 240; first and second image formation lenses 241 and 243; and a scan mirror 250.

The green light module 211 can include a laser light source (not shown) to generate light of an infrared wavelength band; and a second harmonic generator (not shown) to convert the infrared light into a second harmonic of green wavelength band.

The green wavelength light generated from the green light module 211 is reflected by the first reflection mirror 212 in a direction vertical with its exit direction from the green light module 211. Then, the reflected green light's spot is diffused by the diffusion lens 213 and is incident on the second reflection mirror 214.

The second reflection mirror 214 reflects the green light reflected by the first reflection mirror 212, in a direction vertical with an incident path. The green light partially transmits the second reflection mirror 214, and is incident on the light detector 215. The light detector 215 can employ a photo diode. The light detector 215 monitors the intensity of the green light generated by the light module 211, using part of the green light not reflected by the second reflection mirror 214.

The first to third reflection mirrors 212, 214, and 225 are dielectric mirrors or have a metal deposition structure that can reflect each incident light. The first to third reflection mirrors 212, 214, and 225 cannot reflect 100% of the incident light. Thus, part of the incident light becomes extinct in the interior or transmits the reflection mirror. Moreover, the light detector 215 can monitor the intensity of all of the green light, using the part of the green light not reflected by the second reflection mirror 214.

The first and second band pass filters 223 and 224 are positioned between the second reflection mirror 214 and the third reflection mirror 225. The first and second band pass filters 223 and 224 reflect the blue and red light, which exit from the respective laser light sources 221 and 222, toward the third reflection mirror 225. The first and second band pass filters 223 and 224 also transmit the green light incident from the second reflection mirror 214 toward the third reflection mirror 225. The first and second band pass filters 223 and 224 can be formed by depositing dielectric material. These optical devices enable wavelength selection. The third reflection mirror 225 reflects the green, red, and blue light incident from the second band pass filter 224, in a direction vertical with an incident path. The light reflected by the third reflection mirror 225 is incident on the irradiation optical system 230.

The inventive laser projector 200 can be used as a portable small-sized projector. A description of the laser projector 200 can be made using a coordinate system based on three axes, X, Y, and Z. The Z-axis is defined as an optical axis consistent with a light travel direction, and the Y-axis is defined as a predetermined axis vertical with respect to the Z-axis. The X axis is defined as an axis vertical with respect to the Y and Z axes.

The irradiation optical system 230 collimates the light reflected by the third reflection mirror 225, with respect to the Y axis. Thus, the irradiation optical system 230 facilitates its incidence on the spatial light modulator 240, converges the collimated light with respect to the X axis, and irradiates the light of long axes onto a surface of the spatial light modulator 240 in a line type along the Y axis. The irradiation optical system 230 includes a diffusion lens 231 and a collimation lens 232 of Y-axis direction and convergence lenses 233 and 234 of X-axis direction.

The spatial light modulator 240 diffracts the light converted into a line scan type (which are reflected by the third reflection mirror 225 and then incident from the image formation optical system 230) into modes having a plural order besides a zero order and a first order depending on each pixel information. Then, the diffracted light exits toward the scan mirror 250. The spatial light modulator 240 can employ diffraction grating typed devices such as a stress-optic modulator (SOM), a grating light valve (GLV), and a Grating ElectroMechanical System (GEMS).

The diaphragm 260 is positioned between the spatial light modulator 240 and the scan mirror 250. The diaphragm 260 removes the modes having diffraction orders other than the zero-order mode, from among the modes of the light incident from the spatial light modulator 240. In other words, the zero-order mode is passed toward the scan mirror 250.

The scan mirror 250 converges the incident light of the zero-order mode on a specific pixel of a screen or a drum. The green, red, and blue lights are alternately irradiated in sequence, respectively, and are line-scanned and overlapped at a specific pixel to form a whole image. The scan mirror 250 can employ a rotatable polygonal mirror.

A collimation lens 216 is positioned between the second reflection mirror 214 and the first band pass filter 223. The collimation lens 216 collimates and exits the green light reflected by the second reflection mirror 214, toward the first band pass filter 223.

Reflecting the light plural times, the inventive laser projector 200 can output the light internally circulating by 270° or 360° to the exterior. This provides the same function even in a small volume compared with a conventional laser projector where an optical system is arranged such that light goes straight. In other words, the inventive laser projector 200 travels and outputs the light, along a rectangular path or its similar tetragonal path, to the exterior. Accordingly, the light circulates by 270° or 360° with respect to a path of the green light exiting from the green light module 211.

Compared to a conventional laser projector, the inventive laser projector can be embodied even in a small volume, and can thus be used for a small-sized digital equipment.

While the invention has been shown and described with reference to a certain preferred embodiment thereof, it will be understood by those skilled in the art that various changes in form and details may be made therein without departing from the scope of the invention as defined by the appended claims.

## Claims

1. A laser projector, comprising:
a light module to generate green light; and
laser light sources to generate red and blue light,
wherein the light generated in the light module and the laser light sources travels in a rectangular or a tetragonal path inside the laser projector.

2. The laser projector of claim 1, wherein the light generated in the light module and the laser light sources travels is outputted outside the laser projector.

3. The laser projector of claim 1 or 2, further comprising:
a first reflection mirror to reflect the green light in a direction vertical with an exit direction of the green light;
a second reflection mirror to reflect the green light reflected by the first reflection mirror, in a direction vertical with a travel path, from the first reflection mirror; and
first and second band pass filters to transmit the green light reflected by the second reflection mirror, and reflect the red and blue light from the laser light sources.

4. The laser projector of claim 3, further comprising:
a third reflection mirror to reflect the green, red, and blue lights incident from the second band pass filter, in a direction vertical with a travel path;
a spatial light modulator to spatially modulate the light incident from the third reflection mirror;
a scan mirror to project the light spatially modulated in the spatial light modulator, outside the laser projector; and
a diaphragm positioned between the scan mirror and the spatial light modulator.

5. The laser projector of claim 3, further comprising:
a diffusion lens between the first reflection mirror and the second reflection mirror;
a collimation lens between the second reflection mirror and the first band pass filter;
an irradiation optical system between a rotary mirror and the spatial optical modulator; and
a light detector to detect part of the green light transmit from the second reflection mirror, and monitor intensity of the green light generated from the light module.

6. The laser projector of claim 5, wherein the light detector comprises a photo diode.

7. The laser projector of claim 3, wherein the scan mirror employs a rotatable polygonal mirror.

8. The laser projector of claim 5, wherein the irradiation optical system includes
a diffusion lens and a collimation lens to diffuse and collimate the light incident from the second reflection mirror, in a Y-axis direction; and
convergence lenses to converge the light incident from the second reflection mirror, in an X-axis direction.

9. A laser projector, comprising:
a light module to generate green light; and
laser light sources to generate red and blue light,
wherein the light generated in the light module and the laser light sources circulates by 270° or 360° inside the laser projector.

10. The laser projector of claim 9, wherein the light generated in the light module and the laser light sources travels is outputted outside the laser projector.
